# EUROPEAN PATENT APPLICATION

(11) **EP 3 632 739 A1**
(43) Date of publication of application: **08.04.2020**
(21) Application number: 18805467.0
(22) Date of filing: 24.05.2018
(51) Int. Cl.: B60N 2/235, A47C 1/025

(54) **SEAT RECLINING DEVICE FOR VEHICLE**

(30) Priority: 25.05.2017 JP 2017103576; 26.02.2018 JP 2018031916
(71) Applicant: Toyota Boshoku Kabushiki Kaisha, Kariya-shi, Aichi 448-8651 (JP)
(72) Inventor: TERAGUCHI Hiroaki, Kariya-shi Aichi 448-8651 (JP); SUZUKI Hiroyuki, Kariya-shi Aichi 448-8651 (JP)
(74) Representative: Winter, Brandl, Fürniss, Hübner, Röss, Kaiser, Polte - Partnerschaft mbB
(86) International application number: PCT/JP2018/020082
(87) International publication number: WO 2018/216786

(57) **Abstract**

This seat reclining device (10) for a vehicle is provided with a first bracket (21), a second bracket (31), a cam (50), and a second pole (40B) and third pole (40C) which, with rotation or displacement of the cam, move in the radial direction of the first bracket and engage with the second bracket. The second pole and the third pole have sliding grooves (112B, 112C) which extend in a direction corresponding to the radial movement. The first bracket has engaging protrusions (110B, 110C) which are slidably inserted into the sliding grooves, and, when the second bracket is engaged with the second pole and the third pole, the engaging protrusions bias in a direction intersecting the radial movement of the second pole and the third pole through contact with the inner surface of the sliding groove.

## Description

### TECHNICAL FIELD

The present invention relates to a seat reclining device for vehicle that adjusts an angle of a seat back.

### BACKGROUND ART

As a seat reclining device for vehicle used in a seat of a vehicle, for example, a technique described in PTL 1 is known. The seat reclining device for vehicle of PTL 1 includes two brackets configured to rotate relative to each other, a plurality of pawls arranged on a first bracket, and a cam configured to move the pawls in a radial direction. Each pawl is biased by the cam to move toward a radially outer side and moves in the radial direction in response to the rotation of the cam. The pawls move toward the radially outer side, outer teeth of the pawls and inner teeth of a second bracket are meshed with each other, and thus, the second bracket is fixed to the first bracket due to the rotation of the cam. That is, rotation of the second bracket is limited. Here, a ball cam is accommodated between the cam and a predetermined pawl among the plurality of pawls. The ball cam presses the pawl to prevent rattling due to rotation of the cam.

### CITATION LIST

### PATENT LITERATURE

PTL 1: WO 2016/129423

### SUMMARY OF INVENTION

### TECHNICAL PROBLEM

However, in the seat reclining device for vehicle disclosed in PTL 1, the ball cam is a small component and assembly operation thereof is difficult, which can still be improved.

The present invention has been made in view of the above circumstances, and an object of the present invention is to provide a seat reclining device for vehicle that prevents rattling of pawls and improves assembly without increasing the number of components.

### SOLUTION TO PROBLEM

A seat reclining device for vehicle that solves the above problems includes: a first bracket; a second bracket configured to rotate in positive and negative directions relative to the first bracket; a cam configured to rotate or move relative to the first bracket; and a plurality of pawls configured to move in a radial direction of the first bracket based on the rotation or the movement of the cam to engage with the second bracket, in which one of the first bracket and at least one of the plurality of pawls has a groove portion extending in a direction corresponding to the radial movement of the plurality of pawls, and another one has an engagement projection slidably inserted into the groove portion, and in which the engagement projection comes into contact with an inner surface of the groove portion when the second bracket and the plurality of pawls are engaged.

According to this configuration, the one of the first bracket and at least one of the plurality of pawls has the groove portion extending in the direction corresponding to the radial movement of the plurality of pawls, and the other one has the engagement projection slidably inserted into the groove portion. Also, the engagement projection come into contact with the inner surface of the groove portion when the second bracket and the plurality of pawls are engaged. Thereby, the engagement projection is biased in a direction intersecting the radial movement of the plurality of pawls. Such bias can prevent rattling of the pawls. Further, since the engagement projection and the groove portion are provided to the first bracket and the pawl, which constitute the seat reclining device for vehicle, the number of components can be prevented from increasing. In addition, since the engagement projection is inserted into the groove portion when the pawl is assembled to the first bracket, the assembly can be improved. Therefore, it is possible to provide a seat reclining device for vehicle that prevents rattling of pawls and improves assembly without increasing the number of components.

In the seat reclining device for vehicle, the engagement projection is preferably provided to the first bracket, and the groove portion is preferably provided to the at least one of the plurality of pawls. According to this configuration, the groove portion is formed on the pawl, which is an internal component of the seat reclining device for vehicle, and thus is easy to from and is effective.

In the seat reclining device for vehicle, the groove portion preferably penetrates in a thickness direction. According to this configuration, when the pawl is assembled to the first bracket, it is easy to confirm whether the engagement projection is inserted into the groove portion, which improves visibility.

In the seat reclining device for vehicle, the inner surface of the groove portion preferably has a first gradually changing portion and a second gradually changing portion provided, which are provided as inclined surfaces intersecting the radial movement. The first gradually changing portion and the second gradually changing portion preferably have different inclination angles with respect to the radial movement of the pawls. According to this configuration, by including the first gradually changing portion and the second gradually changing portion which have different inclination angles with respect to the radial movement of the pawls, rattling of the pawl can be further prevented.

In the seat reclining device for vehicle, the inclination angle of the second gradually changing portion of the groove portion with respect to the radial movement of the pawls is preferably set larger than the inclination angle of the first gradually changing portion, and the engagement projection preferably comes into contact with the second gradually changing portion when the second bracket and the plurality of pawls are engaged. According to this configuration, when the second bracket and the plurality of pawls are engaged, rattling of the pawl can be further prevented.

### ADVANTAGEOUS EFFECTS OF INVENTION

Due to the means of above inventions, to the present invention is capable of providing a seat reclining device for vehicle that prevents rattling of pawls and improves assembly without increasing the number of components.

### BRIEF DESCRIPTION OF DRAWINGS

[Fig. 1] Fig. 1 is a side view showing a seat including a vehicle seat reclining device.
[Fig. 2] Fig. 2 is a cross-sectional view taken along line II-II of Fig. 1.
[Fig. 3] Fig. 3 is an exploded perspective view of the vehicle seat reclining device.
[Fig. 4] Fig. 4(a) is a plan view showing a first bracket, and Fig. 4(b) is a side view showing the first bracket.
[Fig. 5] Fig. 5 is a plan view showing a cam.
[Fig. 6] Fig. 6(a) is a perspective view showing a first pawl, and Fig. 6(b) is a perspective view showing a second pawl.
[Fig. 7] Fig. 7(a) is a plan view showing a second bracket, and Fig. 7(b) is a cross-sectional view taken along line VIIb-VIIb in Fig. 7(a).
[Fig. 8] Fig. 8 is an exploded view showing a step of the second bracket.
[Fig. 9] Fig. 9 is a schematic view showing a positional relationship between a first limitation portion to a third limitation portion.
[Fig. 10] Fig. 10 is a cross-sectional view taken along line X-X of Fig. 2.
[Fig. 11] Fig. 11 is a cross-sectional view taken along line XI-XI of Fig. 2.
[Fig. 12] Fig. 12 is a cross-sectional view taken along line XII-XII in Fig. 2.
[Fig. 13] Figs. 13 (a) to 13 (b) are cross-sectional views taken along line XII-XII in Fig. 2 showing changes in the positional relationship of the limitation portions of the pawls and pawl restriction portions relative to rotation of the second bracket 31 in the vehicle seat reclining device of the present embodiment.
[Fig. 14] Figs. 14(a) to 14(b) are exploded views showing changes of the vehicle seat reclining device according to Figs. 13(a) to 13(b).
[Fig. 15] Fig. 15 is an exploded view showing the positional relationship of pawl restriction portions and limitation portions of pawls in a second bracket of a vehicle seat reclining device in related art.
[Fig. 16] Fig. 16 is an exploded view showing the positional relationship of the pawl restriction portions and the limitation portions of the pawls in the second bracket of the vehicle seat reclining device of the present embodiment.
[Fig. 17] Fig. 17 is a schematic view showing another embodiment according to the present embodiment.
[Fig. 18] Fig. 18 is a schematic view showing another embodiment according to the present embodiment.
[Fig. 19] Fig. 19 is a schematic view showing another embodiment according to the present embodiment.
[Fig. 20] Fig. 20 is a schematic view showing another embodiment according to the present embodiment.
[Fig. 21] Fig. 21 is a schematic view showing another embodiment according to the present embodiment.
[Fig. 22] Fig. 22 is a schematic view showing another embodiment according to the present embodiment.
[Fig. 23] Fig. 23 is a schematic view showing another embodiment according to the present embodiment.

### DESCRIPTION OF EMBODIMENTS

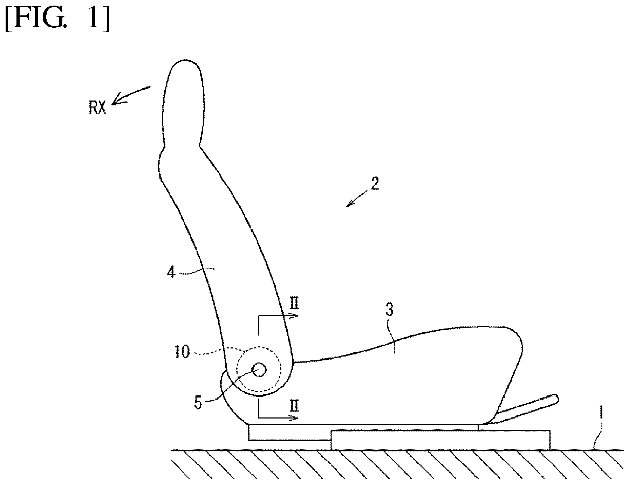

A first embodiment of a vehicle seat reclining device 10 will now be described with reference to Figs. 1 to 23.

As shown in Fig. 1, the vehicle seat reclining device 10 is applied to, for example, a seat 2 arranged on a vehicle floor 1 or the like. The seat 2 includes a seat cushion 3 that forms a seating surface and a seat back 4 that forms a backrest. The seat back 4 is configured to be rotatable and maintainable at a predetermined angle relative to the seat cushion 3.

The seat back 4 is mounted to the seat cushion 3 by the vehicle seat reclining device 10. The vehicle seat reclining device 10 maintains the seat back 4 relative to the seat cushion 3 at the predetermined angle.

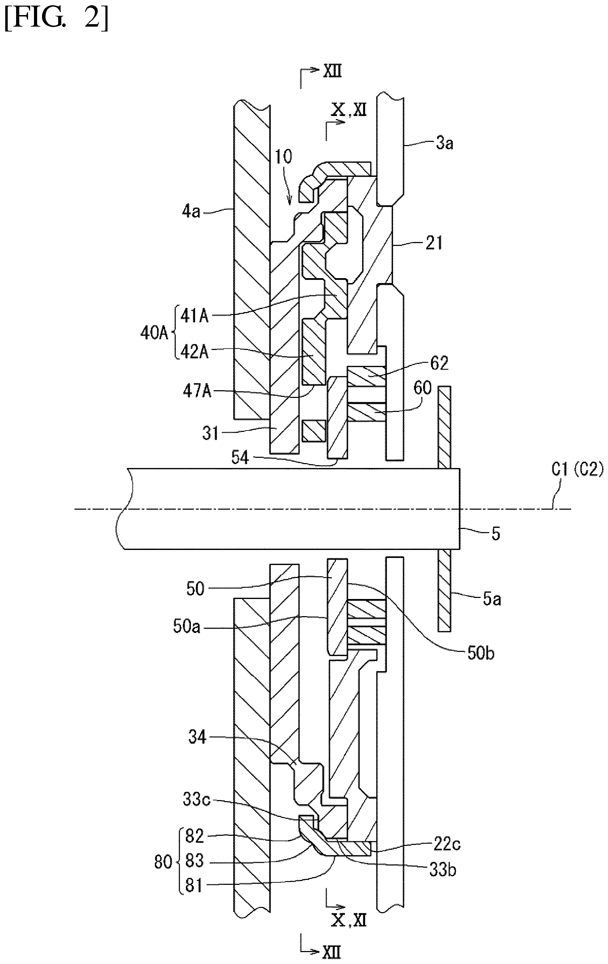

As shown in Fig. 2, a rotor of one of a first bracket 21 and a second bracket 31 (described below) is fixed to a plate 3a attached to the seat cushion 3. A rotor of another one of the first bracket 21 and the second bracket 31 is fixed to a plate 4a attached to the seat back 4. In the present embodiment, the first bracket 21 is fixed to the plate 3a, and the second bracket 31 is fixed to the plate 4a.

A shaft 5 extends through a central portion of the vehicle seat reclining device 10. The shaft 5 operates a cam mechanism arranged in the vehicle seat reclining device 10. An operation lever 5a for rotating the shaft 5 is attached to an end of the shaft 5.

In a state where the vehicle seat reclining device 10 is attached to the seat 2, a rotation axis C1 of the shaft 5 corresponds to a rotation axis C2 of the vehicle seat reclining device 10, namely, a rotation axis of the first bracket 21 and the second bracket 31.

In the following description, the direction extending along a circumference about the rotation axis C2 of the vehicle seat reclining device 10 is referred to as the circumferential direction, and the direction perpendicular to the rotation axis C2 (normal direction) is referred to as the radial direction. Further, a direction, in which the second bracket 31 rotates when the seat back 4 is reclined to the rear, is referred to as a rear rotation direction RX (or "rotation in positive direction F"), and a direction opposite to the rear rotation direction RX is referred to as "rotation in negative direction N".

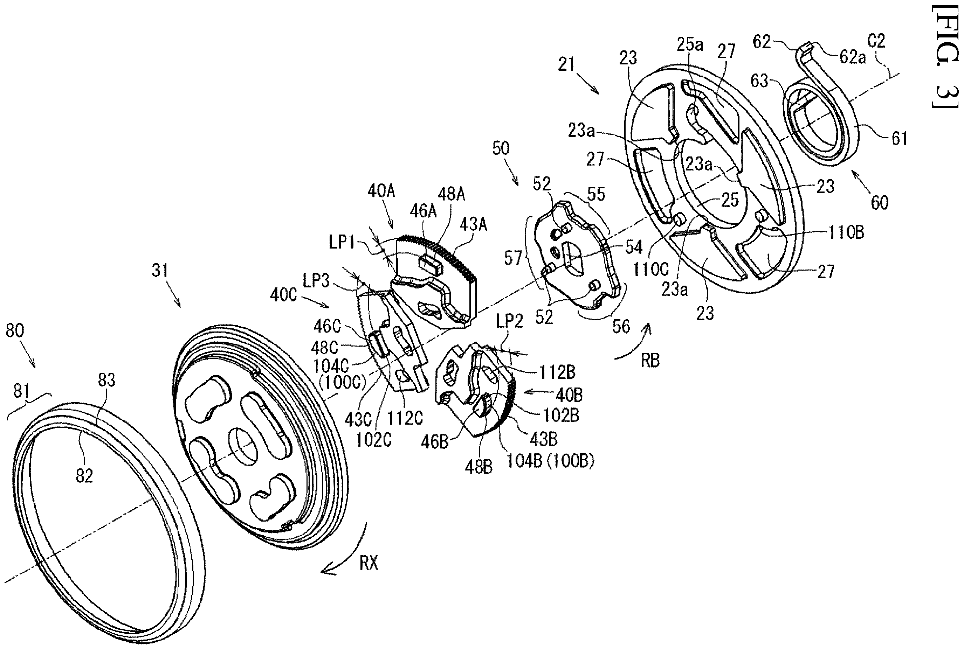

As shown in Figs. 2 and 3, the vehicle seat reclining device 10 includes the first bracket 21, the second bracket 31, a first pawl 40A, a second pawl 40B, a third pawl 40C, a cam 50, a spiral spring 60 that biases the cam 50, and a holding member 80 that holds the first bracket 21 and the second bracket 31. The cam mechanism is configured by the cam 50, the spiral spring 60, the first pawl 40A, the second pawl 40B, and the third pawl 40C.

The holding member 80 includes an annular body 81 and a flange 82 extending from a rim of the body 81 toward the center. The flange 82 includes a projection 83 that projects toward the inner side (toward the second bracket 31). The projection 83 adjusts play for axial movement of the second bracket 31.

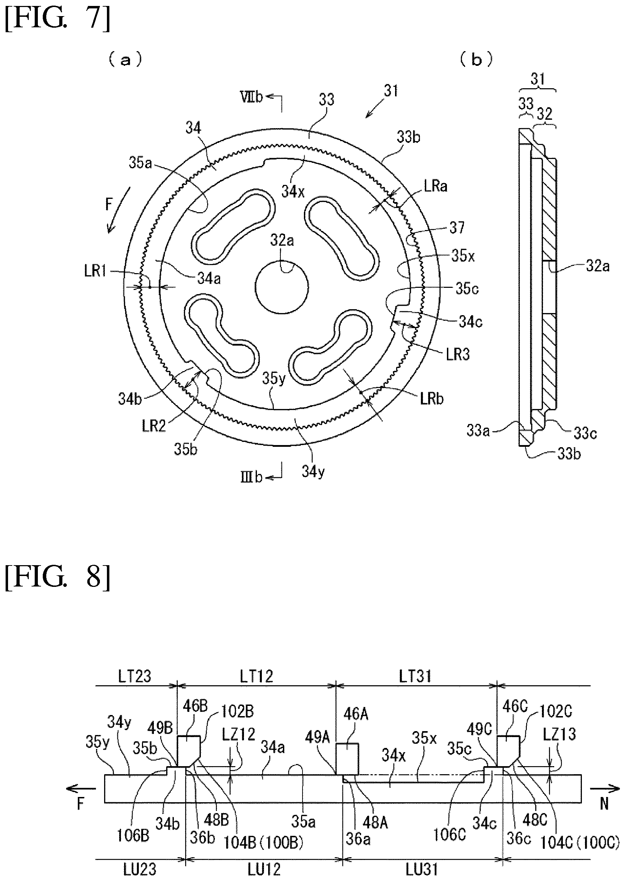

The body 81 covers an outer circumferential surface 22c of the first bracket 21 and an outer circumferential surface 33b of the second bracket 31. The body 81 is laser-welded to the outer circumferential surface 22c of the first bracket 21. The flange 82 covers an outer surface 33c (see Fig. 7) of an outer circumferential wall 33 of the second bracket 31. Accordingly, the holding member 80 holds the first bracket 21 and the second bracket 31 such that a distance between the first bracket 21 and the second bracket 31 in the axial direction is maintained at a predetermined distance.

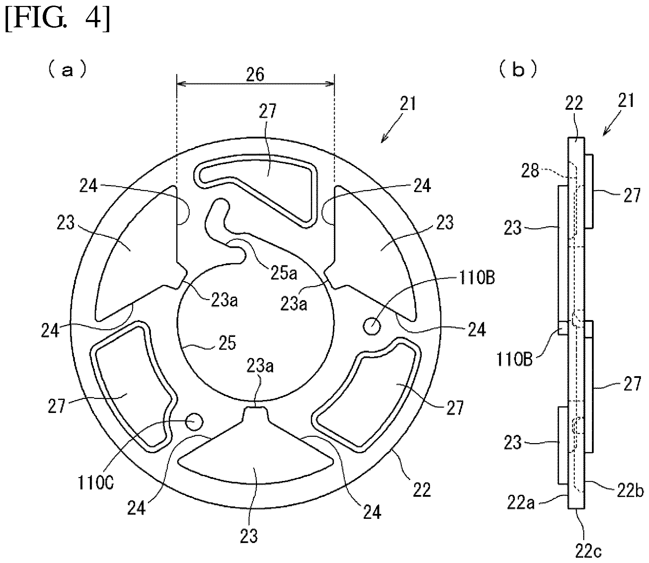

As shown in Figs. 4(a) and 4(b), the first bracket 21 includes a circular body 22, three guides 23 that respectively guide movement of the first pawl 40A, the second pawl 40B, and the third pawl 40C, and projections 27 that attach the first bracket 21 to the plate 3a, which serves as a fixing member.

Each guide 23 projects from an inner surface 22a of the body 22. Each guide 23 includes guide surfaces 24 extending toward the outside and an inner side surface 23a extending in the circumferential direction. The cam 50 is accommodated in a region surrounded by the inner side surfaces 23a of the three guides 23.

The three opposing guide surfaces 24 of two adjacent guides 23 are parallel to each other. The guide surfaces 24 form guide grooves 26 in cooperation with the inner surface 22a of the body 22. The guide grooves 26 guide the first pawl 40A, the second pawl 40B, and the third pawl 40C to move in the radial direction.

The three guides 23 have the same shape and are arranged in the circumferential direction at equal angles. Thus, the three guide grooves 26 are arranged in the circumferential direction at equal angular intervals. The first bracket 21 includes an outer surface 22b recessed at portions located at the opposite side of the guides 23.

The projections 27 project from portions of the outer surface 22b of the body 22 located at the opposite side of the guide grooves 26. The inner surface 22a of the first bracket 21 is recessed at the opposite side of the projections 27.

When the first bracket 21 is attached to the plate 3a serving as a fixing member, the projections 27 of the first bracket 21 are fitted into holes or cutouts arranged in the plate 3a and welded to the plate 3a.

The central portion of the body 22 includes an accommodation portion 25 that accommodates a spiral portion 61 of the spiral spring 60. The accommodation portion 25 is provided with a communication groove 25a cut out toward the radially outer side. An outer engagement portion 62 and an end 62a of the spiral spring 60 shown in Fig. 3 are engaged with the communication groove 25a.

In the guide grooves 26 corresponding to the second pawl 40B and the third pawl 40C of the body 22, which will be described later, an engagement projection 110B and an engagement projection 110C project from the inner surface 22a. The engagement projection 110B is slidably inserted into a sliding groove 112B of the second pawl 40B, which will be described later. Similarly, the engagement projection 110C is slidably inserted into a sliding groove 112C of the third pawl 40C, which will be described later.

As shown in Figs. 2, 3, and 5, the cam 50 is located between the first bracket 21 and the second bracket 31. The cam 50 is accommodated in the region surrounded by the inner side surfaces 23a of the three guides 23 of the first bracket 21.

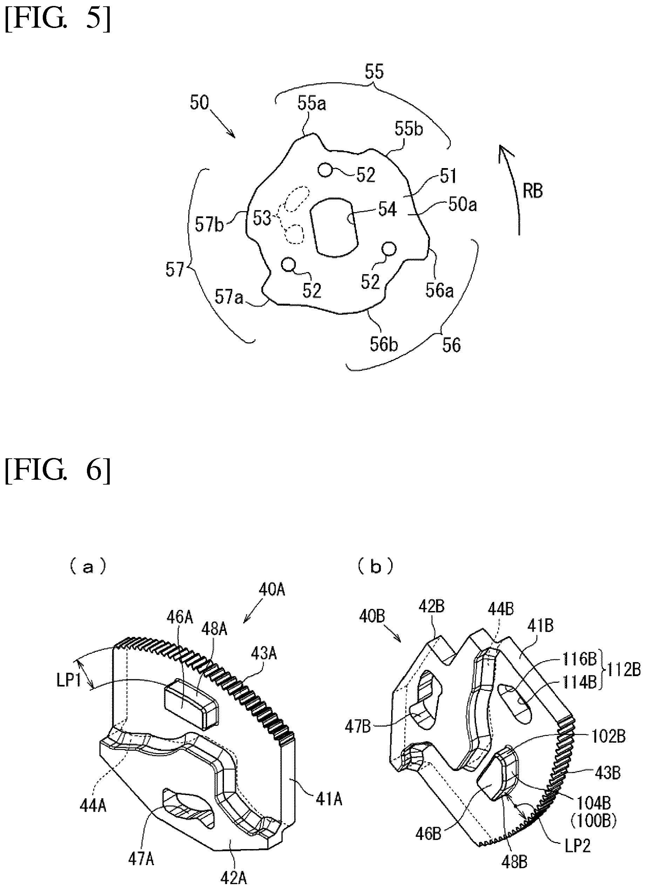

The cam 50 includes a cam body 51, three pawl engagement portions 52, and two spring engagement portions 53 that engage with an inner engagement portion 63 of the spiral spring 60 shown in Figs. 3 and 5. The three pawl engagement portions 52 engage the first pawl 40A, the second pawl 40B, and the third pawl 40C, respectively. The pawl engagement portions 52 are arranged on a first surface 50a of the cam 50, and the spring engagement portions 53 are arranged on a second surface 50b, which is shown in Fig. 2, of the cam 50.

A fitting hole 54 into which the shaft 5 is fitted extends through a central portion of the cam body 51. The cam 50 moves in cooperation with the rotation of the shaft 5. More specifically, operation of the operation lever 5a attached to the shaft 5 rotates the cam 50.

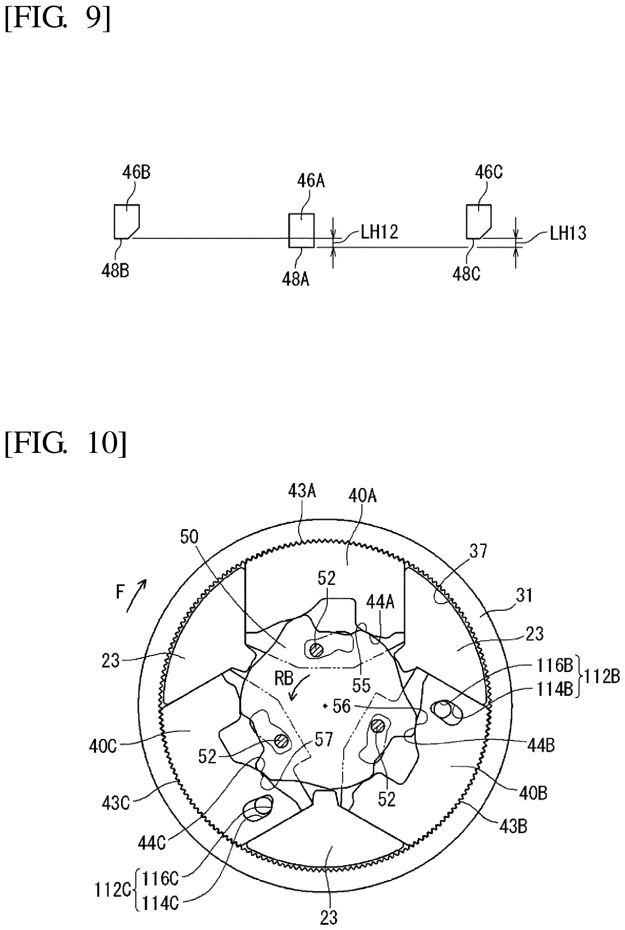

The circumferential surface of the cam body 51 is provided with three cam portions, namely, a first cam portion 55, a second cam portion 56, and a third cam portion 57, which respectively come into contact with cam surfaces of the first pawl 40A, the second pawl 40B, and the third pawl 40C and which are arranged at equal angular intervals. The first cam portion 55 includes a first pushing portion 55a and a second pushing portion 55b that push a first cam surface 44A of the first pawl 40A. The second cam portion 56 includes a first pushing portion 56a and a second pushing portion 56b that push a second cam surface 44B of the second pawl 40B. The third cam portion 57 includes a first pushing portion 57a and a second pushing portion 57b that push a third cam surface 44C of the third pawl 40C (see Fig. 10).

The cam 50 is biased by the spiral spring 60 in a predetermined rotation direction relative to the first bracket 21 (hereinafter referred to as "biasing direction RB"). That is, the spiral spring 60 applies a biasing force that rotates the cam 50 in the biasing direction RB to the cam 50.

As shown in Figs. 2, 5, 6, and 10, the first pawl 40A includes a first block 41A and a second block 42A which are arranged in different steps. More specifically, the first block 41A is located at the radially outer side of the first pawl 40A, and the second block 42A is located at the radially inner side of the first pawl 40A. The first block 41A is shifted from the second block 42A in the axial direction of the rotation axis C2.

The first block 41A is attached to the guide grooves 26 of the first bracket 21. The first block 41A and the cam 50 are located at the same position in the axial direction of the rotation axis C2. The first block 41A has an arcuate outer end surface opposing inner teeth 37 of the second bracket 31. The outer end surface of the first block 41A has outer teeth 43A that mesh with the inner teeth 37 of the second bracket 31.

The end surface of the first block 41A located at a side opposite to the outer end surface has the first cam surface 44A against which the first cam portion 55 of the cam 50 abuts. The first cam surface 44A has a portion against which the first pushing portion 55a of the first cam portion 55 abuts and a portion against which the second pushing portion 55b of the first cam portion 55 abuts.

The second block 42A is arranged on the first surface 50a of the cam 50. That is, the second block 42A is located between the cam 50 and the second bracket 31. The second block 42A has an outer end surface opposing the inner surface of a step 34 of the second bracket 31.

A first limitation portion 46A is provided between the outer end surface of the second block 42A and the outer end surface (the outer teeth 43A) of the first block 41A. The first limitation portion 46A projects from the surface of the first block 41A toward the second bracket 31. The first limitation portion 46A abuts against the first pawl restriction portion 34a of the second bracket 31 shown in Fig. 7(a) to limit the first pawl 40A to move toward the radially outer side. The first limitation portion 46A has an abutment surface 48A that abuts against a first inner surface 35a of the first pawl restriction portion 34a. The distance in the radial direction between the abutment surface 48A of the first limitation portion 46A and the outer teeth 43A is restricted by a predetermined distance in relation to the step structure of the second bracket 31.

A cam hole 47A that penetrates through the second block 42A in the thickness direction is provided at the central portion of the second block 42A. The cam hole 47A extends in the circumferential direction toward the inner side in the biasing direction RB shown in Fig. 3. The corresponding pawl engagement portion 52 of the cam 50 is inserted through the cam hole 47A (see Fig. 6).

The second pawl 40B has the same structure as the first pawl 40A except for the positional structure of the second limitation portion 46B, namely, the positional relationship of an abutment surface 48B of the second limitation portion 46B and outer teeth 43B, and except for the structure of a first clearance portion 100B of the second limitation portion 46B and a sliding groove 112B.

A negative side end 102B of the second limitation portion 46B is provided with the first clearance portion 100B having a corner portion removed and having an inclined surface 104B, of which a height is changed in the radial direction. The inclined surface 104B is a smooth surface whose radial height gradually increases from the negative side end 102B toward the abutment surface 48B. The inclined surface 104B may be straight or curved when viewed in a cross-sectional view. The first clearance portion 100B may have a shape having a surface whose radial height does not increase halfway without being limited to the inclined surface 104B. The first clearance portion 100B may be provided at a positive side end 106B of a second pawl restriction portion 34b without being limited to the negative side end 102B of the second limitation portion 46B. The surface shape at this time may be a smooth surface whose radial height gradually decreases, or may be a shape partially having a surface whose radial height does not increase.

The second pawl 40B is provided with the sliding groove 112B corresponding to the engagement projection 110B. The sliding groove 112B in the present embodiment is provided as a hole penetrating in the thickness direction of the second pawl 40B from the viewpoint of improving visibility when assembling to the first bracket 21. The sliding groove 112B extends in a direction along the guide groove 26 of the first bracket 21. That is, the sliding groove 112B extends along the movement of the second pawl 40B in the radial direction. The outer teeth 43B side of the sliding grooves 112B has a groove shape which is larger than a diameter of the engagement projection 110B. The sliding groove 112B has a groove shape that is tapered toward the radially inner side inward from the outer teeth 43B. A tip end of the groove shape is smaller than the diameter of the engagement projection 110B. The sliding groove 112B is biased in a direction intersecting the radial movement of the second pawl 40B in a state where the outer teeth 43B mesh with the inner teeth 37.

The tapered shape of the sliding groove 112B has a first gradually changing portion 114B and a second gradually changing portion 116B toward the radially inner side from the outer teeth 43B side. Each of the first gradually changing portion 114B and the second gradually changing portion 116B is provided as an inclined surface intersecting the radial movement of the second pawl 40B. Here, among the inclination angles with respect to the radial movement of the second pawl 40B of the first gradually changing portion 114B and the second gradually changing portion 116B, the inclination angle of the second gradually changing portion 116B is set larger than that of the first gradually changing portion 114B. When the engagement projection 110B enters the first gradually changing portion 114B or the second gradually changing portion 116B, a so-called wedge effect gradually acts to prevent rattling of the second pawl 40B.

Looking into the details, the radius of curvature of the outer teeth 43B of the second pawl 40B is smaller than the radius of curvature of the inner teeth 37 of the second bracket 31. Therefore, in a state where the outer teeth 43B mesh with the inner teeth 37, the vicinity of the center in the circumferential direction of the outer teeth 43B mesh deeply, and both ends in the circumferential direction mesh shallowly. This is because a tolerance is required to smoothly mesh the outer teeth 43B with the inner teeth 37. On the other hand, due to such tolerance, rattling may occur when the outer teeth 43B mesh with the inner teeth 37. Therefore, the sliding groove 112B and the engagement projection 110B contribute to prevention of rattling of the second pawl 40B. In addition, in the structure of the related art, since a separate component is required in order to prevent rattling of the pawl, there is a concern about the complexity of assembly. However, by providing the engagement projection 110B on the body 22 of the first bracket 21 and by providing the sliding groove 112B on the second pawl 40B, rattling of the second pawl 40B can be prevented without increasing the number of components.

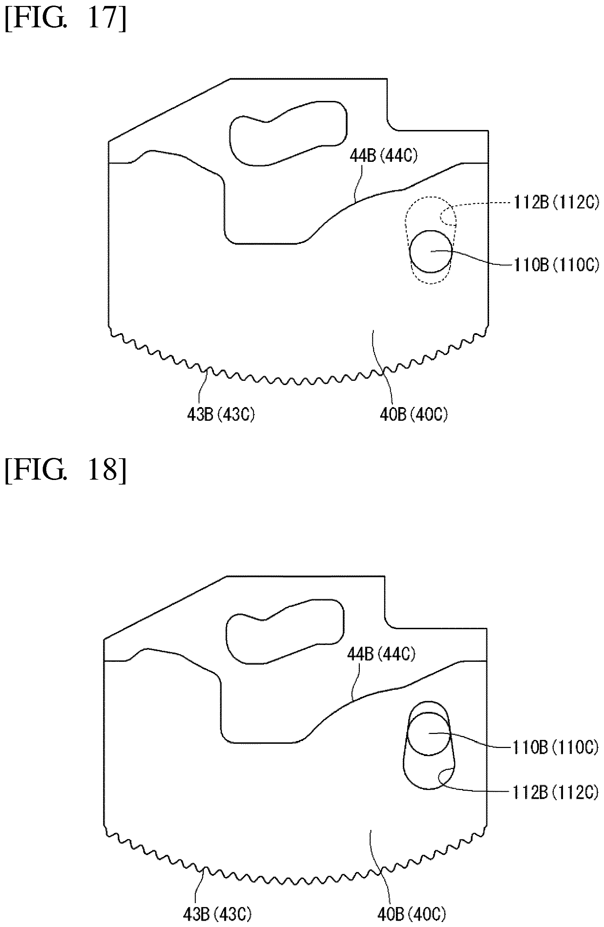

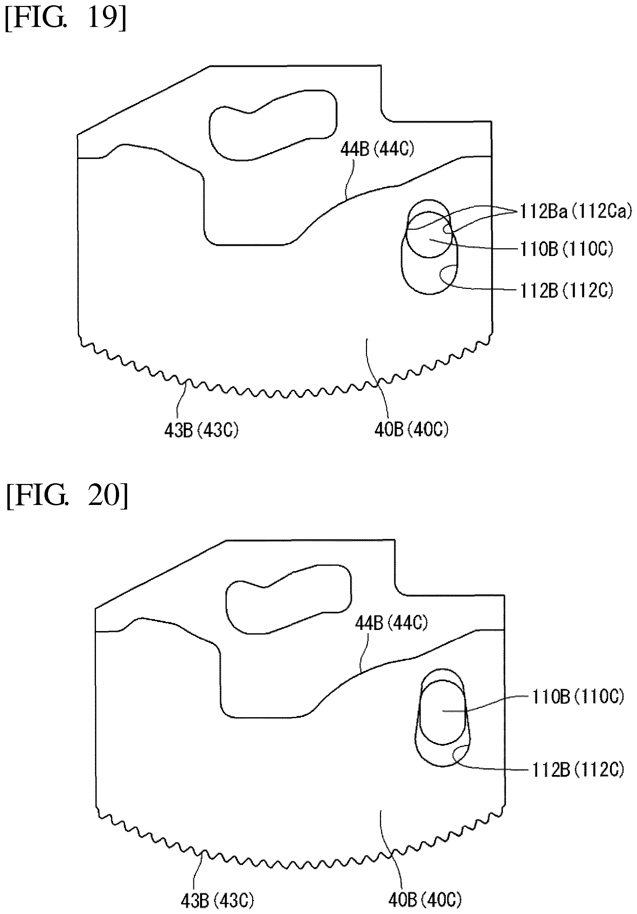

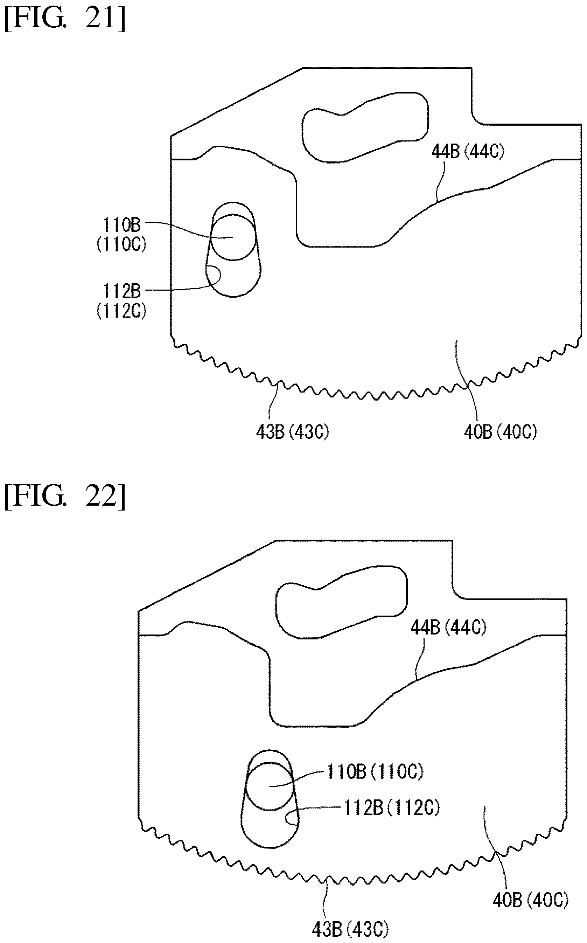

The present embodiment shows an aspect in which the engagement projection 110B is provided on the first bracket 21 and the sliding groove 112B is provided on the second pawl 40B. This is because that if a penetrating hole is provided on the first bracket 21 side, there is a concern that a foreign object or the like enters the vehicle seat reclining device 10. Further, the sliding groove 112B can be easily formed on the second pawl 40B, which is an internal component. However, the relationship between the engagement projection 110B and the sliding groove 112B may be reversed. That is, as shown in Fig. 17, the engagement projection 110B may be provided on the second pawl 40B, and the sliding groove 112B may be provided on the first bracket 21. The sliding groove 112B may have a groove shape that does not penetrate in the thickness direction of the second pawl 40B. The sliding groove 112B may be formed into a groove shape tapered in a straight shape as shown in Fig. 18, instead of the tapered groove shape as shown in Fig. 10 whose middle portion in the radial direction is bent. As shown in Fig. 19, a surface of the sliding groove 112B that abuts against the engaged protrusion 110B in a rattling tightening state may be formed of arcuate surfaces 112Ba that are warped in a reverse direction so as to be in point contact (linear contact) with the circular outer peripheral surface of the engagement projection 110B. As shown in Fig. 20, the engagement projection 110B may protrude into a pin shape having a wide cross-sectional width in the radial direction such as an ellipse instead of a pin shape protruding into a circular shape. The rattling tightening structure formed by the sliding groove 112B and the engagement projection 110B may be set not in the end region on the one side in the circumferential direction of the second pawl 40B as shown in Fig. 10, but in an end region on the other side in the circumferential direction as shown in Fig. 21 or the intermediate region in the circumferential direction as shown in Fig. 22.

The third pawl 40C has the same structure as the first pawl 40A except for the positional structure of the third limitation portion 46C, namely, the positional relationship of an abutment surface 48C of the third limitation portion 46C and outer teeth 43C, and except for the structure of a second clearance portion 100C and a sliding groove 112C on the third limitation portion 46C.

A negative side end 102C of the third limitation portion 46C is provided with the second clearance portion 100C having a corner portion removed and having an inclined surface 104C, of which a height is changed in the radial direction. The inclined surface 104C is a smooth surface whose radial height gradually increases from the negative side end 102C toward the abutment surface 48C. The inclined surface 104C may be straight or curved when viewed in a cross-sectional view. The second clearance portion 100C may have a shape having a surface whose radial height does not increase halfway without being limited to the third limitation portion 46C. The second clearance portion 100C may be provided at a positive side end 106C of a third pawl restriction portion 34c without being limited to the negative side end 102C of the third limitation portion 46C. The surface shape at this time may be a smooth surface whose radial height gradually decreases, or may be a shape partially having a surface whose radial height does not increase.

The third pawl 40C is provided with the sliding groove 112C corresponding to the engagement projection 110C. The sliding groove 112C in the present embodiment is provided as a hole penetrating in the thickness direction of the third pawl 40C from the viewpoint of improving visibility when assembling to the first bracket 21. The sliding groove 112C extends in a direction along the guide groove 26 of the first bracket 21. That is, the sliding groove 112C extends along the movement of the third pawl 40C in the radial direction. The outer teeth 43C side of the sliding grooves 112C has a groove shape which is larger than a diameter of the engagement projection 110C. The sliding groove 112C has a groove shape that is tapered toward the radially inner side from the outer teeth 43C. A tip end of the groove shape is smaller than the diameter of the engagement projection 110C. The sliding groove 112C is biased in a direction intersecting the radial movement of the third pawl 40C in a state where the outer teeth 43C mesh with the inner teeth 37.

The tapered shape of the sliding groove 112C has a first gradually changing portion 114C and a second gradually changing portion 116C toward the radially inner side from the outer teeth 43C side. Each of the first gradually changing portion 114C and the second gradually changing portion 116C is provided as an inclined surface intersecting the radial movement of the third pawl 40C. Here, among the inclination angles with respect to the radial movement of the third pawl 40C of the first gradually changing portion 114C and the second gradually changing portion 116C, the inclination angle of the second gradually changing portion 116C is set larger than that of the first gradually changing portion 114C. When the engagement projection 110C enters the first gradually changing portion 114C or the second gradually changing portion 116C, a so-called wedge effect gradually acts to prevent rattling of the third pawl 40C.

Looking into the details, the radius of curvature of the outer teeth 43C of the third pawl 40C is smaller than the radius of curvature of the inner teeth 37 of the second bracket 31. Therefore, in a state where the outer teeth 43C mesh with the inner teeth 37, the vicinity of the center in the circumferential direction of the outer teeth 43C mesh deeply, and both ends in the circumferential direction mesh shallowly. This is because a tolerance is required to smoothly mesh the outer teeth 43C with the inner teeth 37. On the other hand, due to such tolerance, rattling may occur when the outer teeth 43B mesh with the inner teeth 37. Therefore, the sliding groove 112C and the engagement projection 110C contribute to prevention of rattling of the third pawl 40C. In addition, in the structure of the related art, since a separate component is required in order to prevent rattling of the pawl, there is a concern about the complexity of assembly. However, by providing the engagement projection 110C on the body 22 of the first bracket 21 and by providing the sliding groove 112C on the third pawl 40C, rattling of the third pawl 40C can be prevented without increasing the number of components.

The present embodiment shows an aspect in which the engagement projection 110C is provided on the first bracket 21 and the sliding groove 112C is provided on the third pawl 40C. This is because that if a penetrating hole is provided on the first bracket 21 side, there is a concern that a foreign object or the like enters the vehicle seat reclining device 10. Further, the sliding groove 112C can be easily formed on the third pawl 40C, which is an internal component. However, the relationship between the engagement projection 110C and the sliding groove 112C may be reversed. That is, as shown in Fig. 17, the engagement projection 110C may be provided on the third pawl 40C, and the sliding groove 112C may be provided on the first bracket 21. The sliding groove 112C may have a groove shape that does not penetrate in the thickness direction of the third pawl 40C. The sliding groove 112C may be formed into a groove shape tapered in a straight shape as shown in Fig. 18, instead of the tapered groove shape as shown in Fig. 10 whose middle portion in the radial direction is bent. As shown in Fig. 19, a surface of the sliding groove 112C that abuts against the engaged protrusion 110C in a rattling tightening state may be formed of arcuate surfaces 112Ca that are warped in a reverse direction so as to be in point contact (linear contact) with the circular outer peripheral surface of the engagement projection 110C. As shown in Fig. 20, the engagement projection 110C may protrude into a pin shape having a wide cross-sectional width in the radial direction such as an ellipse instead of a pin shape protruding into a circular shape. The rattling tightening structure formed by the sliding groove 112C and the engagement projection 110C may be set not in the end region on the one side in the circumferential direction of the third pawl 40C as shown in Fig. 10, but in an end region on the other side in the circumferential direction as shown in Fig. 21 or the intermediate region in the circumferential direction as shown in Fig. 22.

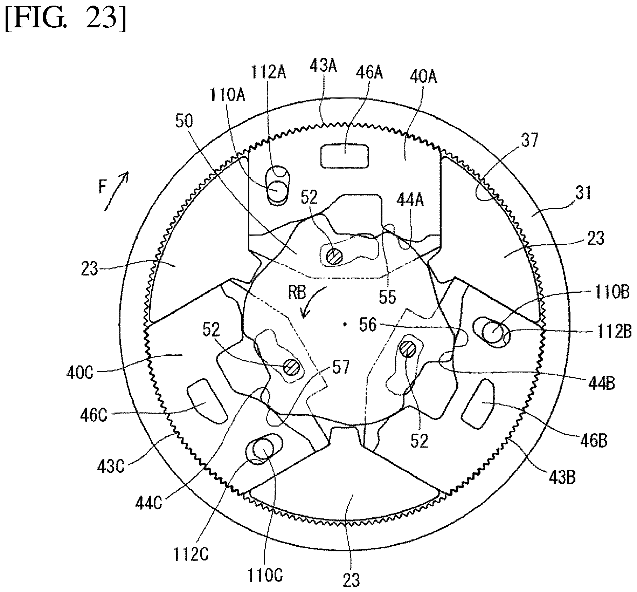

The present embodiment shows an aspect in which both the engagement projection 110B, the sliding groove 112B and the engagement projection 110C, the sliding groove 112C are formed, but may also be an aspect having one combination of the engagement projection 110B, the sliding groove 112B or the engagement projection 110C, the sliding groove 112C. As shown in Fig. 23, the rattling tightening structure formed by the engagement projection and the sliding groove may be configured such that an engagement projection 110A and a sliding groove 112A are provided between the first pawl 40A and the first bracket 21. In such case, as a configuration in which the second pawl 40B and the third pawl 40C are also provided with the engagement projections 110B, 110C and the sliding grooves 112B, 112C with the first bracket 21, the engagement projections 110B, 110C and the sliding grooves 112B, 112C may be fitted to one another loosely so that a slight gap is formed in the circumferential direction when the engagement projection 110A is fitted into the sliding groove 112A and enters the rattling tightening state, which provides an auxiliary rattling tightening function.

The second bracket 31 will now be described with reference to Fig. 7(a) to 9. As shown in Fig. 7(a) and Fig. 7(b), the second bracket 31 includes a circular body 32 and an outer circumferential wall 33 arranged along an outer edge of the body 32. An insertion hole 32a through which the shaft 5 is inserted is formed in the body 32.

The inner teeth 37 are arranged over the entire circumference of an inner circumferential surface 33a of the outer circumferential wall 33. The inner teeth 37 mesh with the outer teeth 43A of the first pawl 40A, the outer teeth 43B of the second pawl 40B, and the outer teeth 43C of the third pawl 40C. The outer circumferential surface 33b of the outer circumferential wall 33 comes into sliding contact with the holding member 80. The outer surface 33c of the outer circumferential wall 33 comes into sliding contact with the projection 83 of the holding member 80 shown in Fig. 2. The inner surface of the body 32 includes an annular step 34 about the rotation axis C2.

In Fig. 8, the upper side is shown as the radially inner side of the second bracket 31, the lower side is shown as the radially outer side of the second bracket 31, and the left-right direction is shown as the circumferential direction of the second bracket 31. Fig. 8 corresponds to a schematic view in which the cross section along line XII-XII in Fig. 2 is spread out, and the step 34 and the first limitation portion 46A to third limitation portion 46C of the first pawl 40A to the third pawl 40C are cut out.

The step 34 includes, sequentially in the positive direction F, a first pawl allowance portion 34x, the first pawl restriction portion 34a, the second pawl restriction portion 34b, a second pawl allowance portion 34y, and the third pawl restriction portion 34c.

The first pawl allowance portion 34x allows the first pawl 40A to move toward the radially outer side. The first pawl allowance portion 34x includes an inner surface 35x having a predetermined radius, that is, a radius extending about the rotation axis C2.

The inner surface 35x of the first pawl allowance portion 34x is configured such that, when the first pawl 40A moves toward the radially outer side with the first limitation portion 46A being located at the first pawl allowance portion 34x, the first limitation portion 46A does not comes into contact with the inner surface 35x until the outer teeth 43A of the first pawl 40A mesh with the inner teeth 37. That is, the distance LRa between the inner teeth 37 of the second bracket 31 and the inner surface 35x of the first pawl allowance portion 34x shown in Fig. 7(a) is slightly less than or equal to the distance LP1 between the outer teeth 43A of the first pawl 40A and the abutment surface 48A of the first limitation portion 46A shown in Fig. 6 (a).

The first pawl restriction portion 34a restricts the first pawl 40A to move toward the radially outer side. The first pawl restriction portion 34a includes the first inner surface 35a having a smaller radius than the inner surface 35x of the first pawl allowance portion 34x. The first pawl restriction portion 34a extends in the positive direction F from the first pawl allowance portion 34x and is longer in the circumferential direction than the second pawl restriction portion 34b. More specifically, the first pawl restriction portion 34a extends to a negative side end 36b of the second pawl restriction portion 34b.

The first inner surface 35a of the first pawl restriction portion 34a is configured such that, when the first pawl 40A moves toward the radially outer side with the first limitation portion 46A being located on the first pawl restriction portion 34a, the outer teeth 43A of the first pawl 40A are separated from the inner teeth 37 of the second bracket 31 in a state where the first limitation portion 46A abuts against the first inner surface 35a.

The first inner surface 35a of the first pawl restriction portion 34a is configured such that, when the second pawl 40B moves toward the radially outer side with the second limitation portion 46B being located on the first pawl restriction portion 34a, the second limitation portion 46B does not come into contact with the first inner surface 35a of the first pawl restriction portion 34a until the outer teeth 43B of the second pawl 40B mesh with the inner teeth 37.

More specifically, the distance LR1 between the inner teeth 37 of the second bracket 31 and the first inner surface 35a of the first pawl restriction portion 34a is longer than the distance LP1 between the outer teeth 43A of the first pawl 40A and the abutment surface 48A of the first limitation portion 46A, and slightly less than or equal to the distance LP2 between the outer teeth 43B of the second pawl 40B and the abutment surface 48B of the second limitation portion 46B shown in Figs. 3 and 6(a).

The second pawl restriction portion 34b restricts the second pawl 40B to move toward the radially outer side. The second pawl restriction portion 34b has a second inner surface 35b having a smaller radius than the first inner surface 35a of the first pawl restriction portion 34a.

The second inner surface 35b of the second pawl restriction portion 34b is configured such that, when the second pawl 40B moves toward the radially outer side with the second limitation portion 46B being located at the second pawl restriction portion 34b, the outer teeth 43B of the second pawl 40B are separated from the inner teeth 37 of the second bracket 31 in a state where the second limitation portion 46B abuts against the second inner surface 35b. That is, the distance LR2 between the inner teeth 37 of the second bracket 31 and the second inner surface 35b of the second pawl restriction portion 34b shown in Fig. 7(a) is longer than the distance LP2 between the outer teeth 43B of the second pawl 40B and the second limitation portion 46B.

The second pawl allowance portion 34y allows the third pawl 40C to move toward the radially outer side. The second pawl allowance portion 34y has an inner surface 35y having a larger radius than the second inner surface 35b of the second pawl restriction portion 34b.

The inner surface 35y of the second pawl allowance portion 34y is configured such that, when the third pawl 40C moves toward the radially outer side with the third limitation portion 46C being located at the second pawl allowance portion 34y, the third limitation portion 46C does not come into contact with the inner surface 35y of the second pawl allowance portion 34y until the outer teeth 43C of the third pawl 40C mesh with the inner teeth 37. That is, the distance LRb between the inner teeth 37 of the second bracket 31 and the inner surface 35y of the second pawl allowance portion 34y shown in Fig. 7(a) is slightly less than or equal to the distance LP3 between the outer teeth 43C of the third pawl 40C and the abutment surface 48C of the third limitation portion 46C shown in Fig. 3.

The third pawl restriction portion 34c restricts the third pawl 40C to move toward the radially outer side. The third pawl restriction portion 34c includes a third inner surface 35c having a smaller radius than the first inner surface 35a of the first pawl restriction portion 34a.

The third inner surface 35c of the third pawl restriction portion 34c is configured such that, when the third pawl 40C moves toward the radially outer side with the third limitation portion 46C being located at the third pawl restriction portion 34c, the outer teeth 43C of the third pawl 40C are separated from the inner teeth 37 of the second bracket 31 in a state where the third limitation portion 46C abuts against the third inner surface 35c. That is, the distance LR3 between the inner teeth 37 of the second bracket 31 and the third inner surface 35c of the third pawl restriction portion 34c shown in Fig. 7(a) is longer than the distance LP3 between the third pawl 40C and the third limitation portion 46C.

The positional relationship of the first to third limitation portions 46A to 46C and the first to third pawl restriction portions 34a to 34c in the circumferential direction will now be described with reference to Fig. 8. As shown in Fig. 8, the distance LT12 between a side surface of the first limitation portion 46A of the first pawl 40A facing the positive direction F and a side surface of the second limitation portion 46B of the second pawl 40B facing the positive direction F is equal to the distance LU12 from an end surface of the first pawl restriction portion 34a facing the negative direction N.

The distance LT23 between a side surface of the second limitation portion 46B of the second pawl 40B facing the positive direction F and a side surface of the third limitation portion 46C of the third pawl 40C facing the positive direction F is equal to the distance LU23 between an end surface of the second pawl restriction portion 34b facing the negative direction N and an end surface of the third pawl restriction portion 34c facing the negative direction N.

The distance LT31 between a side surface of the third limitation portion 46C of the third pawl 40C facing the positive direction F and a side surface of the first limitation portion 46A of the first pawl 40A facing the positive direction F is equal to the distance LU31 between an end surface of the third pawl restriction portion 34c facing the negative direction N and an end surface of the first pawl restriction portion 34a facing the negative direction N. The distance relationship of the first to third limitation portions 46A to 46C and the first to third pawl restriction portions 34a to 34c in the circumferential direction are hereinafter referred to as the "circumferential structure of pawl movement limitation".

The positional relationship of the first to third limitation portions 46A to 46C in the radial direction will now be described with reference to Fig. 9. Fig. 9 only shows the first to third limitation portions 46A to 46C, and shows the positional relationship of the first to third limitation portions 46A to 46C which is set by engagement with the cam 50 without force being applied to any of the first to third limitation portions 46A to 46C.

As shown in Fig. 9, the abutment surface 48A of the first limitation portion 46A is located at the radially outer side from the abutment surface 48B of the second limitation portion 46B. The separation distance LH12 between the abutment surface 48A of the first limitation portion 46A and the second limitation portion 46B is larger than the step distance LZ12 between the first inner surface 35a of the first pawl restriction portion 34a and the second inner surface 35b of the second pawl restriction portion 34b. The difference between the separation distance LH12 and the step distance LZ12 is set to a slight distance that can be cancelled by pushing force of external factors (described below).

The abutment surface 48A of the first limitation portion 46A is located at the radially outer side from the abutment surface 48C of the third limitation portion 46C. The separation distance LH13 between the abutment surface 48A of the first limitation portion 46A and the abutment surface 48C of the third limitation portion 46C is larger than the step distance LZ13 between the first inner surface 35a of the first pawl restriction portion 34a and the third inner surface 35c of the third pawl restriction portion 34c. The difference between the separation distance LH13 and the step distance LZ13 is set to a slight distance that can be cancelled by pushing force of external factors (described below).

The distance relationship of the first to third limitation portions 46A to 46C and the first to third pawl restriction portions 34a to 34c in the radial direction is hereinafter referred to as the "radial structure of pawl movement limitation". In the "circumferential structure of pawl movement limitation" and the "radial structure of pawl movement limitation," when the rotation angle of the second bracket 31 relative to the first bracket 21 is a predetermined value (hereinafter referred to as specified angle), positive side corners 49A to 49C of the first to third limitation portions 46A to 46C may abut against negative side ends 36a to 36c of the first to third pawl restriction portions 34a to 34c, respectively.

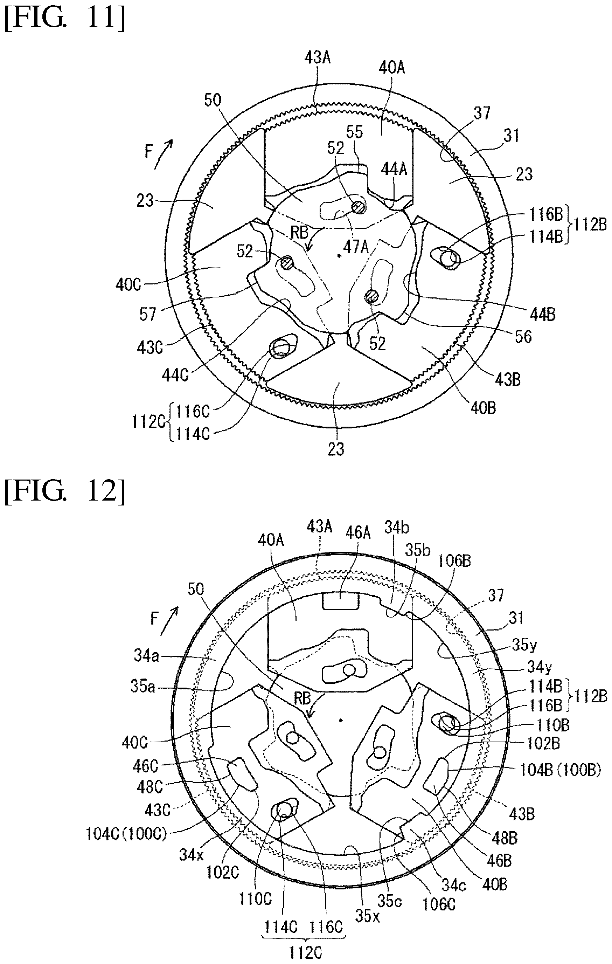

The operation of the vehicle seat reclining device 10 will now be described with reference to Figs. 10 to 12. Fig. 10 shows a locked state in which the outer teeth 43A to 43C of the pawls 40A to 40C are meshed with the inner teeth 37 of the second bracket 31. Fig. 11 shows an unlocked state in which the outer teeth 43A to 43C of the pawls 40A to 40C are not meshed with the inner teeth 37 of the second bracket 31 when each of the pawls 40A to 40C is kept at the radially inner side. Fig. 12 shows a lock limitation state in which the outer teeth 43A to 43C of the pawls 40A to 40C do not mesh with the inner teeth 37 of the second bracket 31 when the first pawl 40A is limited to move toward the radially outer side.

The vehicle seat reclining device 10 performs the two basic operations described below. The first basic operation is a movement of each of the pawls 40A to 40C when the operation lever 5a is operated to rotate the cam 50. The second basic operation limits the movement of each of the pawls 40A to 40C controlled by the rotation angle of the second bracket 31. In the first basic operation, the first to third pawls 40A to 40C operate in the same manner. The first pawl 40A will now be described as an example.

The cam 50 is biased to rotate in the biasing direction RB. When the cam 50 rotates in the biasing direction RB, the first cam portion 55 pushes the first cam surface 44A of the first pawl 40A, thus, the first pawl 40A moves toward the radially outer side. As shown in Fig. 10, when the first cam portion 55 pushes the first pawl 40A toward the radially outer side, the outer teeth 43A of the first pawl 40A mesh with the inner teeth 37 of the second bracket 31. Accordingly, the second bracket 31 is fixed to the first bracket 21 and the vehicle seat reclining device 10 is shifted to the locked state.

When the operation lever 5a is operated to rotate the cam 50 in the direction opposite to the biasing direction RB, the pawl engagement portion 52 of the cam 50 pushes the inner surface of the cam hole 47A of the first pawl 40A, and thus, the first pawl 40A moves toward the radially inner side. After that, the outer teeth 43A of the first pawl 40A are separated from the inner teeth 37 of the second bracket 31 as shown in Fig. 11. As a result, the second bracket 31 becomes non-rotatable relative to the first bracket 21 and the vehicle seat reclining device 10 is shifted to the unlocked state.

The second basic operation will now be described with reference to Fig. 12. As shown in Fig. 12, when the first pawl restriction portion 34a of the second bracket 31 is located at the first limitation portion 46A of the first pawl 40A, cancellation of the operation of the operation lever 5a rotates the cam 50 in the biasing direction RB. The rotation of the cam 50 moves the first pawl 40A toward the radially outer side so that the first limitation portion 46A of the first pawl 40A abuts against the first pawl restriction portion 34a. Accordingly, the first pawl 40A is prevented from being moved before the first pawl 40A moves toward the radially outermost side. That is, when the first pawl 40A is limited to move in the radial direction, the outer teeth 43A of the first pawl 40A remain separated from the inner teeth 37 of the second bracket 31. Further, abutment of the first limitation portion 46A of the first pawl 40A against the first pawl restriction portion 34a of the second bracket 31 stops rotation of the cam 50 and restricts the second pawl 40B and the third pawl 40C to move toward the outer side. As a result, the outer teeth 43B of the second pawl 40B and the outer teeth 43C of the third pawl 40C are separated from the inner teeth 37 of the second bracket 31. In such a manner, when the first pawl restriction portion 34a of the second bracket 31 is located at the first limitation portion 46A of the first pawl 40A, the vehicle seat reclining device 10 becomes into the lock limitation state in which the vehicle seat reclining device 10 is limited to become the locked state, that is, a state in which the second bracket 31 is allowed to rotate.

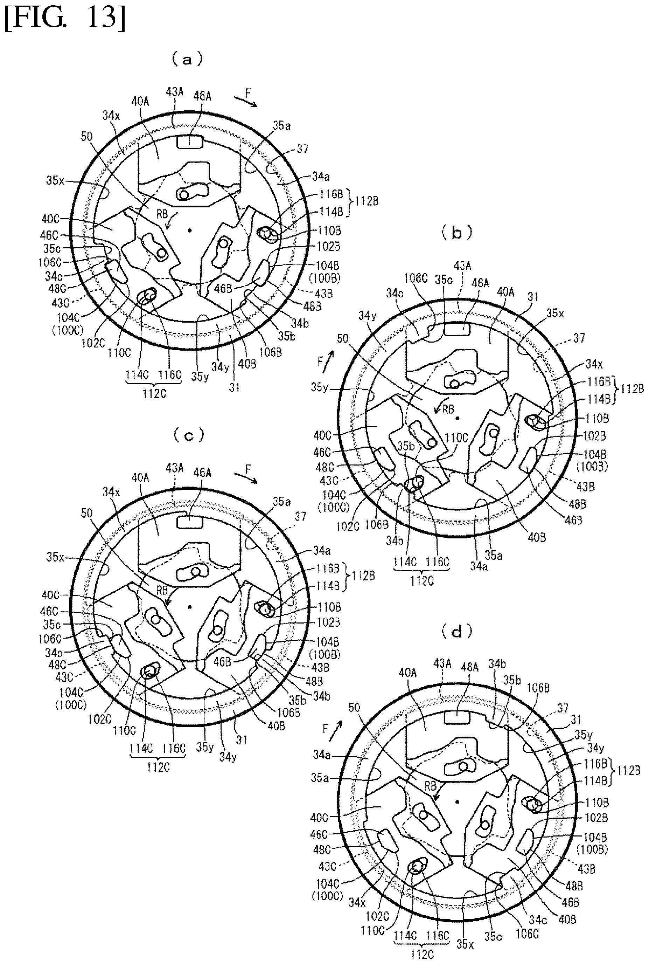

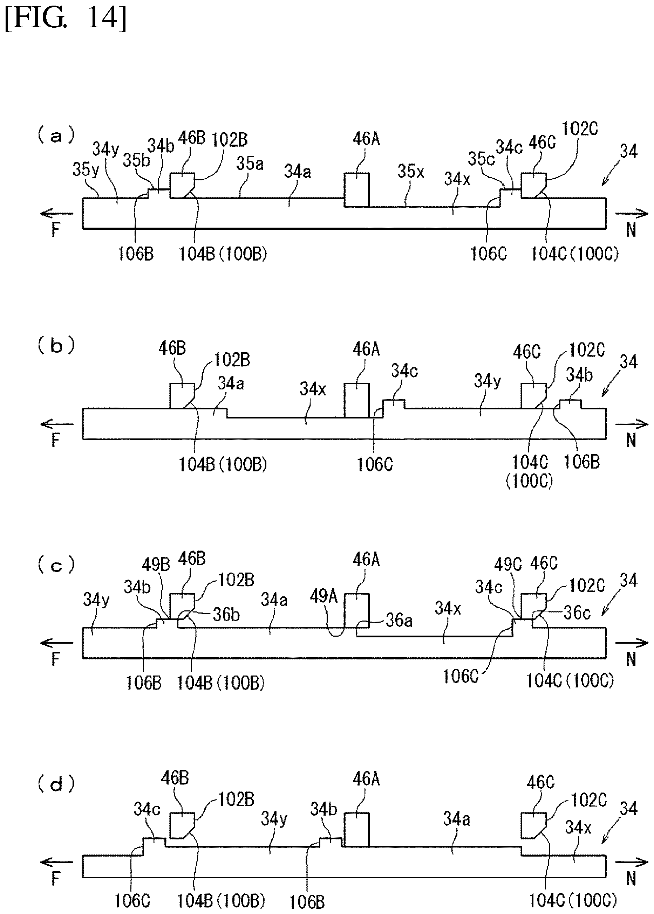

The changes in the positional relationship of the first pawl 40A to the third pawl 40C and the first pawl restriction portion 34a to the third pawl restriction portion 34c relative to rotation of the second bracket 31 will now be described with reference to Figs. 13(a) to 13(d) and Figs. 14(a) to 14(d).

Figs. 13(a) and 14(a) show the positional relationship of the first pawl 40A to the third pawl 40C and the first pawl restriction portion 34a to the third pawl restriction portion 34c when the second bracket 31 is slightly rotated from a specified angle relative to the first bracket 21 in the positive direction F. The first limitation portion 46A of the first pawl 40A is located at the first pawl allowance portion 34x, the second limitation portion 46B of the second pawl 40B is located at the first pawl restriction portion 34a, and the third limitation portion 46C of the third pawl 40C is located at the second pawl allowance portion 34y. The first pawl allowance portion 34x allows the first pawl 40A to move toward the radially outer side, the first pawl restriction portion 34a allows the second pawl 40B to move toward the radially outer side, and the second pawl allowance portion 34y allows the third pawl 40C to move toward the radially outer side. Thus, the vehicle seat reclining device 10 may shift to the locked state.

Figs. 13(b) and 14(b) show the positional relationship of the first limitation portion 46A to the third limitation portion 46C of the first pawl 40A to the third pawl 40C when the second bracket 31 is rotated by a predetermined angle from the specified angle relative to the first bracket 21 in the positive direction F. The third limitation portion 46C of the third pawl 40C approaches an end of the second pawl restriction portion 34b facing the positive direction F. The first limitation portion 46A to the third limitation portion 46C of the first pawl 40A to the third pawl 40C and the step 34 of the second bracket 31 is substantially equal to the relationship shown in Fig. 14(a). Thus, the vehicle seat reclining device 10 may shift to the locked state. An angle range in which the first limitation portion 46A of the first pawl 40A is disposed at the position of the first pawl allowance portion 34x is defined as a "second bracket rotation limitation range" (in other words, referred to as a locked zone).

Figs. 13(c) and 14(c) show the positional relationship of the first limitation portion 46A to the third limitation portion 46C of the first pawl 40A to the third pawl 40C when the second bracket 31 is rotated slightly from the specified angle relative to the first bracket 21 in the negative direction N. The first limitation portion 46A of the first pawl 40A is located at the first pawl restriction portion 34a and is in contact with the first pawl restriction portion 34a. Thus, the vehicle seat reclining device 10 may shift to the lock limitation state. The second limitation portion 46B of the second pawl 40B is located at the second pawl restriction portion 34b, and the third limitation portion 46C of the third pawl 40C is located at the third pawl restriction portion 34c. The first pawl restriction portion 34a restricts the first pawl 40A to move toward the radially outer side. The second limitation portion 46B of the second pawl 40B is not in contact with the second pawl restriction portion 34b. However, when an external factor (described below) applies a pushing force, the second limitation portion 46B of the second pawl 40B may be restricted to move toward the radially outer side by the second pawl restriction portion 34b. The third limitation portion 46C of the third pawl 40C is not in contact with the third pawl restriction portion 34c. However, when the external factor applies the pushing force, the third limitation portion 46C of the third pawl 40C may be restricted to move toward the radially outer side by the third pawl restriction portion 34c. To facilitate illustration, Fig. 14(c) shows that the second limitation portion 46B is in contact with the second pawl restriction portion 34b and the third limitation portion 46C is in contact with the third pawl restriction portion 34c. Nevertheless, as described above, each limitation portion is normally not in contact with the corresponding pawl restriction portion when the external factor does not apply the pushing force.

Figs. 13(d) and 14(d) show the positional relationship of the first limitation portion 46A to the third limitation portion 46C of the first pawl 40A to the third pawl 40C when the second bracket 31 is rotated by the predetermined angle from the specified angle relative to the first bracket 21 in the negative direction N. The first limitation portion 46A of the first pawl 40A is located at the first pawl restriction portion 34a, and the side surface of the first limitation portion 46A of the first pawl 40A facing the positive direction approaches the second pawl restriction portion 34b. Accordingly, the first pawl 40A is restricted to move toward the radially outer side, and the second bracket 31 is restricted to move in the negative direction N. Further, when the restriction of the movement of the first pawl 40A toward the radially outer side stops rotation of the cam 50, the second pawl 40B and the third pawl 40C are restricted to move toward the radially outer side. In this manner, the vehicle seat reclining device 10 shifts to the lock limitation state. An angle range in which the first limitation portion 46A of the first pawl 40A is disposed at the position of the first pawl restriction portion 34a is defined as a "second bracket rotation allowance range" (in other words, referred to as a free zone).

Here, the range of Figs. 13(c) and 13(d) is the "second bracket rotation allowance range" in which rotation of the second bracket 31 with respect to the first bracket 21 is allowed. The range of Figs. 13(a) and 13(b) is the "second bracket rotation limitation range" in which rotation of the second bracket 31 with respect to the first bracket 21 is limited.

The second limitation portion 46B and the third limitation portion 46C when the first limitation portion 46A transitions from the angle at which the first limitation portion 46A engages with the first pawl restriction portion 34a (Figs. 13(c) and 13(d): the "second bracket rotation allowance range") to the angle at which the first limitation portion 46A engages with the first pawl allowance portion 34x (Figs. 13 (a) and 13 (b): the "second bracket rotation limitation range") among the rotation angles of the second bracket 31 with respect to the first bracket 21 will be described.

When the second bracket 31 rotates from the "second bracket rotation allowance range" toward the "second bracket rotation limitation range", the second limitation portion 46B passes above the second pawl restriction portion 34b, and the third limitation portion 46C passes above the third pawl restriction portion 34c. At this time, the negative side end 102B of the second limitation portion 46B and the positive side end 106B of the second pawl restriction portion 34b come into contact with each other in a direction inclined with respect to the rotation direction of the second bracket 31 with respect to the first bracket 21 due to the first clearance portion 100B, and thus catching is prevented. Similarly, the negative side end 102C of the third limitation portion 46C and the positive side end 106C of the third pawl restriction portion 34c come into contact with each other in a direction inclined with respect to the rotation direction of the second bracket 31 with respect to the first bracket 21 due to the first clearance portion 100C, and thus catching is prevented. That is, the inclined surface 104B of the first clearance portion 100B has a surface shape that prevents catching when returning from the free zone to the locked zone. Similarly, the inclined surface 104C of the second clearance portion 100C has a surface shape that prevents catching when returning from the free zone to the locked zone.

The step structure of the second bracket 31 will now be described with reference to Fig. 14(c). In the lock limitation state shown in Fig. 14(c), the first limitation portion 46A of the first pawl 40A is in contact with the first pawl restriction portion 34a. The second limitation portion 46B of the second pawl 40B may be separated from or come into sliding contact with the second pawl restriction portion 34b. The third limitation portion 46C of the third pawl 40C may be separated from or come into sliding contact with the third pawl restriction portion 34c. When the second bracket 31 rotates in the positive direction F from the lock limitation state shown in Fig. 14(c), the first limitation portion 46A of the first pawl 40A comes into sliding contact with the first pawl restriction portion 34a. Continuous rotation of the second bracket 31 gradually decreases the contact area of the first limitation portion 46A of the first pawl 40A and the first pawl restriction portion 34a, the contactable area of the second limitation portion 46B of the second pawl 40B and the second pawl restriction portion 34b, and the contactable area of the third limitation portion 46C of the third pawl 40C and the third pawl restriction portion 34c in the same manner. The above-described the "circumferential structure of pawl movement limitation" and the "radial structure of pawl movement limitation" maintain a contact state of the first pawl 40A and the first pawl restriction portion 34a, a contactable state of the second pawl 40B and the second pawl restriction portion 34b, and a contactable state of the third pawl 40C and the third pawl restriction portion 34c until the second bracket 31 reaches the specified angle. When the rotation angle of the second bracket 31 becomes the specified angle, the positive side corner 49A of the first limitation portion 46A may abut against the negative side end 36a of the first pawl restriction portion 34a, the positive side corner 49B of the second limitation portion 46B may abut against the negative side end 36b of the second pawl restriction portion 34b, and the positive side corner 49C of the third limitation portion 46C may abut against the negative side end 36c of the third pawl restriction portion 34c.

In the contactable state of the second limitation portion 46B of the second pawl 40B, movement of the second pawl 40B toward the radially outer side allows the second limitation portion 46B of the second pawl 40B to come into contact with the second pawl restriction portion 34b. The same applies to the contactable state of the third limitation portion 46C of the third pawl 40C. The contactable area of the second pawl 40B and the second pawl restriction portion 34b represents a contactable area when the second pawl 40B moves toward the radially outer side so that the second limitation portion 46B of the second pawl 40B comes into contact with the second pawl restriction portion 34b. The same applies to the contactable area of the third pawl 40C and the third pawl restriction portion 34c.

In a case where there is only one limitation portion like in the related art structure, the pushing force of the cam 50 caused by external factors that cause the cam 50 to rotate concentrates in a positive side corner of the limitation portion when the second bracket 31 reaches the specified angle to reduce the contact area. Further, the cam 50 is biased by the spiral spring 60 in the biasing direction RB. Thus, when the second bracket 31 reaches the specified angle to reduce the contact area, the pushing force of the cam 50 based on the force of the spiral spring 60 concentrates in the positive side corner of the limitation portion. In this regard, the above-described structure disperses the pushing force of the cam 50 to the first limitation portion 46A to the third limitation portion 46C. Accordingly, deformation of the first pawl 40A to the third pawl 40C, in particular, the first pawl 40A to the third pawl 40C (in particular, the first limitation portion 46A to the third limitation portion 46C) is prevented.

The cam 50 is rotated by an external factor in the following case. The vehicle seat reclining devices 10 are arranged at the left and right sides of the seat 2. The cams 50 of the left and right seat reclining devices 10 move in cooperation. Thus, the vehicle seat reclining devices 10 normally shift from the lock limitation state to the locked state at the same timing. However, on rare occasions, only one of the vehicle seat reclining devices 10 shifts to the locked state, and the other vehicle seat reclining device 10 is maintained in the lock limitation state. In this state, one of the vehicle seat reclining devices 10 fixes the seat back 4 to the seat cushion 3 to restrict rotation of the second bracket 31, and the other vehicle seat reclining device 10 is maintained in the lock limitation state. In the lock limitation state, the first bracket 21 and the second bracket 31 may rotate relatively, and the cams 50 rotate easily. Thus, swinging of the seat 2 in the front-to-rear direction, vibration of the vehicle, and the like slightly swing the operation lever 5a. The vehicle occupant pushes the operation lever 5a to limit swinging of the operation lever 5a and performs procedures in an order reversed from unlocking. This rotates the cam 50 in the biasing direction RB, which corresponds to the case in which the cam 50 is rotated by external factors. When such a pushing operation is performed, the pushing force that rotates the operation lever 5a is applied to the pawls through the cam 50. A biasing force of the spiral spring 60, that is, a larger force than the force normally applied to the cam 50, is applied to the pawls as the pushing force of external factors.

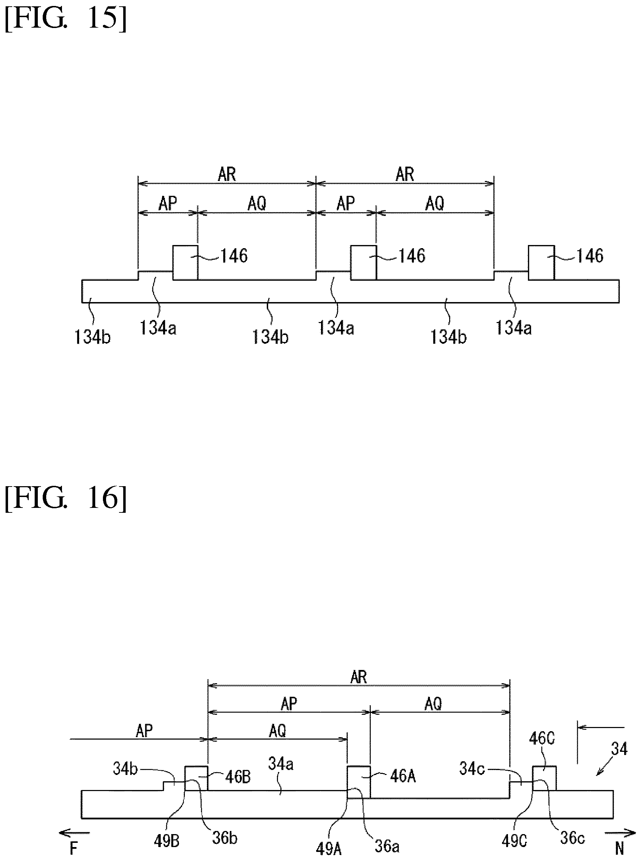

The step structure of the second bracket will now be described with reference to Figs. 15 and 16. Fig. 15 shows the step structure of the second bracket 31 in the related art. As shown in Fig. 15, in the structure of the related art, pawl restriction portions 134a and pawl allowance portions 134b are arranged in correspondence with first to third limitation portions 146. The pawl restriction portions 134a and the pawl allowance portions 134b are arranged alternately in the circumferential direction. In this case, the rim of the second bracket 31 is divided into three regions, and the pawl restriction portion 134a and the pawl allowance portion 134b are arranged at each region. Thus, the same effect as the present embodiment described above is obtained. However, the following problem occurs.

The range in which the first pawl 40A to the third pawl 40C are allowed to move toward the radially outer side at the step 34 of the second bracket 31 is defined as the "pawl movement allowance range AQ". The range in which the first pawl 40A to the third pawl 40C are restricted to move toward the radially outer side at the step 34 of the second bracket 31 is defined as the "pawl movement restriction range AP". The range that is the sum of the pawl movement allowance range AQ and the pawl movement restriction range AP is defined as the "control range AR". In the structure of the related art, the control ranges AR of the first pawl 40A to the third pawl 40C do not overlap. Thus, the rotation angle of the second bracket 31 corresponding to the control range AR (hereinafter referred to as control angle range) is virtually less than or equal to 120 degrees, and the control angle range cannot be greater than or equal to 120 degrees.

The control angle range that is greater than 120 degrees is effective for forming the vehicle seat reclining device 10 in the manner described below. For example, when a reference position is set at a position where the seat back 4 is arranged perpendicular to the seat cushion 3, the vehicle seat reclining device 10 can be in the lock limitation state in the range from the reference position to 50 degrees in front of the seat back 4 and in the locked state in the range from the reference position to 80 degrees behind the seat back 4. In this case, the control angle range is 130 degrees, and the control angle range can be greater than or equal to 120 degrees. The vehicle seat reclining device having the structure of the related art shown in Fig. 15 cannot be used for a vehicle that requires such a specification.

Fig. 16 shows the step structure of the second bracket 31 of the first embodiment. The first pawl restriction portion 34a and the second pawl restriction portion 34b are located at different positions in the radial direction. Further, the first pawl restriction portion 34a of the second bracket 31 extends to the negative side end 36b of the second pawl restriction portion 34b, which differs from the structure of the related art. In this case, the pawl movement restriction range AP of the first pawl 40A overlaps the pawl movement allowance range AQ of the second pawl 40B (this structure is hereinafter referred to as overlapping structure of control range AR). This structure expands the control range AR and the control angle range of the second bracket 31 as compared with the structure of the related art in which the pawl movement restriction range AP of the first pawl 40A does not overlap the pawl movement allowance range AQ of the second pawl 40B.

In the vehicle seat reclining device 10 (see Fig. 1), as shown in Fig. 13(a), when the vehicle seat reclining device 10 is in the locked state, the first limitation portion 46A to the third limitation portion 46C are respectively in contact with the first pawl allowance portion 34x, the first pawl restriction portion 34a, and the second pawl restriction portion 34b, or may be in a contactable state, namely, a state of coming into contact when force is applied from the cam 50.

As shown in Fig. 14(c), when the vehicle seat reclining device 10 is in the lock limitation state, only the first limitation portion 46A is in contact with the first pawl restriction portion 34a. When the first limitation portion 46A is in contact with the first pawl restriction portion 34a, the second pawl 40B and the third pawl 40C are limited to move in the radial direction by the cam 50. Thus, the second limitation portion 46B of the second pawl 40B and the third limitation portion 46C of the third pawl 40C are not in contact with the step 34.

More specifically, as shown in Fig. 14(a), when the vehicle seat reclining device 10 is in the locked state and excessive load may be applied to the first pawl 40A to the third pawl 40C, the load is dispersed by the first limitation portion 46A of the first pawl 40A, the second limitation portion 46B of the second pawl 40B, and the third limitation portion 46C of the third pawl 40C being in contact with the step 34. As shown in Fig. 14(c) or 14(d), when the vehicle seat reclining device 10 is in the lock limitation state and excessive load is not applied to the first pawl 40A to the third pawl 40C, the positions of the second pawl 40B and the third pawl 40C in the radial direction are controlled by the cam 50 by the first pawl 40A being in contact with the step 34. In such a manner, in the first embodiment, the number of the first limitation portion 46A to the third limitation portion 46C that are in contact with the step 34 changes in accordance with whether the vehicle seat reclining device 10 is in the locked state or the lock limitation state (hereinafter referred to as limitation portion engagement structure). This structure expands the control angle and obtains strength for the locked state.

As described above, according to the vehicle seat reclining device 10 of the present embodiment, the negative side end 102B of the second limitation portion 46B is provided with the first clearance portion 100B having a corner portion removed and having the inclined surface 104B of which a height is changed in the radial direction. When the first limitation portion 46A transitions from the angle at which the first limitation portion 46A engages with the first pawl restriction portion 34a to the angle at which the first limitation portion 46A engages with the first pawl allowance portion 34x among the rotation angles of the second bracket 31 with respect to the first bracket 21, the negative side end 102B of the second limitation portion 46B and the positive side end 106B of the second pawl restriction portion 34b come into contact with each other in a direction inclined with respect to the rotation direction of the second bracket 31 with respect to the first bracket 21 due to the first clearance portion 100B. Therefore, it is possible to provide a vehicle seat reclining device 10 capable of preventing catching when the second bracket 31 rotates from the "second bracket rotation allowance range" toward the "second bracket rotation limitation range".

The first clearance portion 100B is preferably provided at the negative side end 102B of the second limitation portion 46B. According to this configuration, it is assumed that the second bracket 31 has setting ranges and shapes of the pawl restriction portions set finely as the number of pawls increases. Therefore, when the first clearance portion 100B is provided at the pawl restriction portion side, there is a concern of being affected by the normal movement of allowance and restriction of the radial movement of the pawls. However, by providing the first clearance portion 100B at the second limitation portion 46B on the second pawl 40B side as in the above configuration, it is possible to prevent catching of the rotation of the second bracket 31 while obtaining the normal movement during the radial movement of the second pawl 40B without being affected by allowance and restriction of the radial movement of the second pawl 40B.

The third pawl 40C of the plurality of pawls preferably includes the third limitation portion 46C that restricts the movement in the radial direction. The second bracket 31 preferably includes the third pawl restriction portion 34c provided in correspondence with the third pawl 40C to restrict the third pawl 40C to move in the radial direction by engaging with the third limitation portion 46C of the third pawl 40C. The third pawl restriction portion 34c is preferably disposed on the positive side from the second pawl restriction portion 34b, and on the radially inner side, at the same position in the radial direction, or on the radially outer side of the second pawl restriction portion 34b. Either the negative side end 102C of the third limitation portion 46C is preferably provided with the second clearance portion 100C having an inclined surface 104C of which a height is changed in the radial direction. When the first limitation portion transitions from the angle at which the first limitation portion engages with the first pawl restriction portion to the angle at which the first limitation portion engages with the first pawl allowance portion among the rotation angles of the second bracket 21 with respect to the first bracket 31, the negative side end 102C of the third limitation portion 46C and the positive side end 106C of the third pawl restriction portion 34c preferably come into contact with each other in a direction inclined with respect to the rotation direction of the second bracket 31 with respect to the first bracket 21 due to the second clearance portion 100C. According to this configuration, by setting the third pawl 40C similarly to the second pawl 40B, the forces applied to each pawl can be dispersed. Further, similarly as the second pawl 40B, by providing the second clearance portion 100C on the third limitation portion 46C of the third pawl 40C, it is possible to further prevent catching of the rotation of the second bracket 31.

The first clearance portion 100B and the second clearance portion 100C are preferably inclined surfaces of which heights are gradually changed in the radial direction. According to this configuration, the limitation portions of the pawls and the pawl restriction portions pass easily and smoothly, which further prevents catching.

The second pawl 40B and the third pawl 40C have sliding grooves 112B, 112C extending in the direction corresponding to the radial movement, and the first bracket 21 has engagement projections 110B, 110C slidably inserted into the sliding grooves 112B, 112C, respectively. The engagement projections 110B, 110C come into contact with the inner surfaces of the sliding grooves 112B, 112C when the second bracket 31, the second pawl 40B, and the third pawl 40C are engaged. Thereby, the engagement projections 110B, 110C are biased in the direction intersecting the radial movement of the second pawl 40B and the third pawl 40C. Such bias can prevent rattling of the second pawl 40B and the third pawl 40C. Further, since the engagement projections 110B, 110C and the sliding grooves 112B, 112C are provided to the first bracket 21, the second pawl 40B, and the third pawl 40C, which constitute the vehicle seat reclining device 10, the number of components can be prevented from increasing. In addition, since the engagement projections 110B, 110C are inserted into the sliding grooves 112B, 112C when the second pawl 40B and the third pawl 40C are assembled to the first bracket 21, the assembly can be improved. Therefore, it is possible to provide a vehicle seat reclining device 10 that prevents rattling of pawls and improves assembly without increasing the number of components.

In the vehicle seat reclining device 10, the engagement projections 110B, 110C are preferably provided to the first bracket 21, and the sliding grooves 112B, 112C are preferably provided to the at least one of the plurality of pawls. Thereby, the sliding grooves 112B, 112C are formed on the second pawl 40B and the third pawl 40C, which are internal components of the vehicle seat reclining device 10, and thus are easy to from and are effective.

In the vehicle seat reclining device 10, the sliding grooves 112B, 112C preferably penetrate in the thickness direction. Thereby, when the second pawl 40B and the third pawl 40C are assembled to the first bracket 21, it is easy to confirm whether the engagement projections 110B, 110 C are inserted into the sliding grooves 112B, 112C, which improves visibility.

In the vehicle seat reclining device 10, the inner surfaces of the sliding grooves 112B, 112C preferably include first gradually changing portions 114B, 114C and second gradually changing portions 116B, 116C which are provided as inclined surfaces intersecting the radial movement. The first gradually changing portions 114B, 114C and the second gradually changing portions 116B, 116C preferably have different inclination angles with respect to the radial movement of the second pawl 40B and the third pawl 40C. According to this configuration, by including the first gradually changing portions 114B, 114C and the second gradually changing portions 116B, 116C, which have different inclination angles with respect to the radial movement of the second pawl 40B and the third pawl 40C, rattling of the second pawl 40B and the third pawl 40C can be further prevented.

In the vehicle seat reclining device 10, the inclination angle of the second gradually changing portions 116B, 116C in the sliding grooves 112B, 112C with respect to the radial movement of the second pawl 40B and the third pawl 40C is preferably set larger than the inclination angle of the first gradually changing portions 114B, 114C, and the engagement projections 110B, 110C preferably comes into contact with the second gradually changing portions 116B, 116C when the second bracket 31, the second pawl 40B, and the third pawl 40C are engaged. According to this configuration, when the second bracket 31, the second pawl 40B, and the third pawl 40C are engaged, rattling of the second pawl 40B and the third pawl 40C can be further prevented.

An embodiment for carrying out the present invention has been described, and the present invention may be carried out in various modes other than the above embodiment. For example, the vehicle seat is exemplified as a wheeled vehicle seat, but is not limited to a wheeled vehicle, and may be applied to various vehicles such as a ship and an aircraft.

This application is based on Japanese Patent Application 2017-103576 filed on May 25, 2017, and Japanese Patent Application 2018-031916 filed on February 26, 2018, contents of which are incorporated by reference herein.

### INDUSTRIAL APPLICABILITY

According to the seat reclining device for vehicle of the present invention, it is possible to provide a vehicle seat reclining device that prevents rattling of pawls and improves assembly without increasing the number of components. The present invention having this effect is useful for, for example, a seat reclining device for vehicle.

### REFERENCE SIGNS LIST

- 1: Vehicle floor
- 2: Seat
- 3: Seat cushion
- 3a: Plate
- 4: Seat back
- 4a: Plate
- 5: Shaft
- 5a: Operation lever
- 10: Vehicle seat reclining device
- 21: First bracket
- 22: Body
- 22a: Inner surface
- 22b: Outer surface
- 22c: Outer peripheral surface
- 23: Guide
- 23a: Inner side surface
- 24: Guide surface
- 25: Accommodation portion
- 25a: Communication groove
- 26: Guide groove
- 27: Projection
- 31: Second bracket
- 32: Body
- 32a: Insertion hole
- 33: Outer peripheral wall
- 33a: Inner peripheral surface
- 33b: Outer peripheral surface
- 33c: Outer surface
- 34: Step
- 34a: First pawl restriction portion
- 34b: Second pawl restriction portion
- 34c: Third pawl restriction portion
- 34x: First pawl allowance portion
- 34y: Second pawl allowance portion
- 35a: First inner surface
- 35b: Second inner surface
- 35c: Third inner surface
- 35x: Inner surface
- 35y: Inner surface
- 36a: Negative side end
- 36b: Negative side end
- 36c: Negative side end
- 37: Inner teeth
- 40A: First pawl
- 41A: First block
- 42A: Second block
- 43A: Outer teeth
- 44A: First cam surface
- 46A: First limitation portion
- 47A: Cam hole
- 48A: Abutment surface
- 49A: Positive side corner
- 40B: Second pawl
- 43B: Outer teeth
- 44B: Second cam surface
- 46B: Second limitation portion
- 48B: Abutment surface
- 49B: Positive side corner
- 40C: Third pawl
- 43C: Outer teeth
- 44C: Third cam surface
- 46C: Third limitation portion
- 48C: Abutment surface
- 49C: Positive side corner
- 50: Cam
- 50a: First surface
- 50b: Second surface
- 51: Cam body
- 52: Pawl engagement portion
- 53: Spring engagement portion
- 54: Fitting hole
- 55: First cam portion
- 55a: First pushing portion
- 55b: Second pushing portion
- 56: Second cam portion
- 56a: First pushing portion
- 56b: Second pushing portion
- 57: Third cam portion
- 57a: First pushing portion
- 57b: Second pushing portion
- 60: Spiral spring
- 61: Spiral portion
- 62: Outer engagement portion
- 62a: End
- 63: Inner engagement portion
- 80: Holding member
- 81: Body
- 82: Flange
- 83: Projection
- 134a: Pawl restriction portion
- 134b: Pawl allowance portion
- 146: First limitation portion to third limitation portion
- AP: Pawl movement restriction range
- AQ: Pawl movement allowance range
- AR: Control range
- C1: Rotation axis
- C2: Rotation axis
- F: Positive direction
- N: Negative direction
- LRa: Distance
- LRb: Distance
- LR1: Distance
- LR2: Distance
- LR3: Distance
- LP1: Distance
- LP2: Distance
- LP3: Distance
- LH12: Separation distance
- LH13: Separation distance
- LT12: Distance
- LT23: Distance
- LT31: Distance
- LU12: Distance
- LU23: Distance
- LU31: Distance
- LZ12: Step distance
- LZ13: Step distance
- RB: Biasing direction
- RX: Rear rotation direction
- 100B: First clearance portion
- 110A: Engagement projection
- 112A: Sliding groove
- 102B: Negative side end
- 104B: Inclined surface
- 106B: Positive side end
- 110B: Engagement projection
- 112B: Sliding groove
- 112Ba: Arcuate surface
- 114B: First gradually changing portion
- 116B: Second gradually changing portion
- 100C: Second clearance portion
- 102C: Negative side end
- 104C: Inclined surface
- 106C: Positive side end
- 110C: Engagement projection
- 112C: Sliding groove
- 112Ca: Arcuate surface
- 114C: First gradually changing portion
- 116C: Second gradually changing portion

## Claims

1. A seat reclining device for vehicle, the seat reclining device comprising:
a first bracket;
a second bracket configured to rotate in positive and negative directions relative to the first bracket;
a cam configured to rotate or move relative to the first bracket; and
a plurality of pawls configured to move in a radial direction of the first bracket based on the rotation or the movement of the cam to engage with the second bracket,
wherein one of the first bracket and at least one of the plurality of pawls has a groove portion extending in a direction corresponding to the radial movement of the plurality of pawls, and another one has an engagement projection slidably inserted into the groove portion, and
wherein the engagement projection comes into contact with an inner surface of the groove portion when the second bracket and the plurality of pawls are engaged.

2. The seat reclining device for vehicle according to claim 1,
wherein the engagement projection is provided to the first bracket, and the groove portion is provided to the at least one of the plurality of pawls.

3. The seat reclining device for vehicle according to claim 1 or 2,
wherein the groove portion penetrates in a thickness direction.

4. The seat reclining device for vehicle according to any one of claims 1 to 3,
wherein the inner surface of the groove portion has a first gradually changing portion and a second gradually changing portion, the first gradually changing portion and the second gradually changing portion being provided as inclined surfaces intersecting the radial movement, and
wherein the first gradually changing portion and the second gradually changing portion have different inclination angles with respect to the radial movement of the pawls.

5. The seat reclining device for vehicle according to claim 4,
wherein the inclination angle of the second gradually changing portion of the groove portion with respect to the radial movement of the pawls is set larger than the inclination angle of the first gradually changing portion, and
wherein the engagement projection comes into contact with the second gradually changing portion when the second bracket and the plurality of pawls are engaged.
